# EUROPEAN PATENT APPLICATION

(11) **EP 4 815 492 A1**
(43) Date of publication of application: **30.09.2026**
(21) Application number: 26168148.0
(22) Date of filing: 26.03.2026
(51) Int. Cl.: H04Q 1/02

(54) **PATCH PANEL WITH CONFIGURABLE PORT GROUPS**

(30) Priority: 27.03.2025 US 202563778739 P; 16.03.2026 US 202619568008
(71) Applicant: GO!FOTON HOLDINGS, INC., Somerset, NJ 08873 (US)
(72) Inventor: NAKAGAWA, Haruki, Milford, NJ 08848 (US); TAKEUCHI, Kenichiro, North Brunswick, NJ 08902 (US); CHEN, David Zhi, Dallas, TX 75230 (US)
(74) Representative: Valea AB

(57) **Abstract**

A patch panel, including a first sidewall; a second sidewall; a plurality of layers extending along a width dimension of the patch panel from the first sidewall to the second sidewall, being attached to the first sidewall and the second sidewall, and extending along a depth dimension of the patch panel, such that the layers define one or more horizontal openings of the patch panel with each horizontal opening having no vertical support other than the first sidewall and second sidewall, at least one of the layers including one or more rails extending along the depth dimension, and the rails being configured for attaching to respective patch panel components; and one or more cassettes attached to respective ones of the rails, each cassette having a body, a plurality of front port assemblies, and one or more rear accesses.

## Description

### CROSS-REFERENCE TO RELATED APPLICATION

The present application claims the benefit of the filing date of U.S. Provisional Application No. 63/778,739, filed on March 27, 2025, the disclosure of which is hereby incorporated herein by reference.

### BACKGROUND

Patch panels are widely used in electronic networks to monitor, interconnect and test circuits. A common type of patch panel is intended for installation in a rack and includes access points at the front of the panel and at the rear of the panel so that when the panel is installed in the rack someone at the front of the rack can access the panel through the front access points and someone at the rear of the rack can access the panel through the rear access points. Often, the front access points are selectively coupled to the rear access points, either through internal cables directly coupling the front access points to the rear access points, or through a combination of elements that may include internal cables. Further, the front access points and rear access points often take the form of adapters or connectors to facilitate connection of external cables to the panel. In a common application, a panel serves to connect a multiple of first devices to a second device by coupling cables from the first devices to adapters at the front of the panel and coupling a cable from the second device to an adapter at the rear of the panel, with the front adapters being connected to the rear adapter by cables inside the panel.

### SUMMARY OF THE INVENTION

It has been recognized that as the demand for device connections via patch panels continues to increase, there is a desire to increase the number of connections that can be managed by a single patch panel without increasing the size of the panel. Accordingly, there is a desire to minimize the space required for each patch panel connection and thereby maximize the density of the patch panel connections. It has been further recognized that there is significant variation in the front-rear connection requirements for patch panels, and that therefore there is a desire to provide patch panels that are readily reconfigurable to accommodate such variation and minimize the burden associated with ensuring a panel is amenable to particular connection requirements.

In view of the desire for high-density, readily-reconfigurable patch panels, the technology described in this disclosure is provided. One way in which the patch panels of the present technology allow for high connection density and adaptable configuration is by providing a patch panel that does not require internal vertical support.

In accordance with an aspect of the presently disclosed technology a patch panel is provided, the patch panel including a first sidewall; a second sidewall; a plurality of layers extending along a width dimension of the patch panel from the first sidewall to the second sidewall, being attached to the first sidewall and the second sidewall, and extending along a depth dimension of the patch panel, such that the layers define one or more horizontal openings of the patch panel with each horizontal opening having no vertical support other than the first sidewall and second sidewall, at least one of the layers including one or more rails extending along the depth dimension, and the rails being configured for attaching to respective patch panel components; and one or more cassettes attached to respective ones of the rails, each cassette having a body, a plurality of front port assemblies, and one or more rear accesses, one or more of the front port assemblies being communicatively coupled to one or more of the rear accesses.

### BRIEF DESCRIPTION OF THE DRAWINGS

The accompanying drawings are not intended to be drawn to scale. Like reference numbers and designations in the various drawings indicate like elements Also, for purposes of clarity not every component may be labeled in every drawing.
Fig. 1 is a front perspective view of a cassette that may be included in a patch panel.
Fig. 2 is a front perspective view of a body of the cassette of Fig. 1.
Fig. 3 is a front perspective view of the cassette of Fig. 1 with cover parts and internal cables not shown.
Fig. 4A is a front perspective view of a patch panel chassis and a cassette positioned for insertion into the chassis.
Fig. 4B is a perspective detail view of a layer cross-section indicated in Fig. 4A.
Fig. 5 is a front perspective view of a patch panel having chassis of the type shown in Fig. 4A and eighteen cassettes of the type shown in Fig. 4A.
Fig. 6 is a front perspective view of the patch panel of Fig. 5 with a front cover and a rear cover removed.
Fig. 7 is a rear perspective view of the patch panel of Fig. 5 with the rear cover removed.
Fig. 8 is a top view of the patch panel of Fig. 5 with the rear cover removed.
Fig. 9 is a detail view of a portion of a patch panel chassis of Fig. 4A, with a focus on rail structure and rail positioning according to an embodiment.
Fig. 10A is a front perspective view of the cassette body of Fig. 2, with a mechanism for manipulating a front groove portion of the body.
Fig. 10B is a top detail view of parts of the front groove portion of the Fig. 2 cassette body, parts of a rear groove portion of the Fig. 2 cassette body, and a rail, showing how the front groove portion and rear groove portion engage the rail to secure the corresponding cassette along the longitudinal direction of the rail.
Fig. 11A is front perspective view of a patch panel chassis of the type shown in Figs. 4A-9 with a cassette positioned for insertion into the chassis.
Fig. 11B is a simplified view of the cassette cross-section indicated in Fig. 11A, showing a flexible tab of the cassette in an unflexed position.
Fig. 11C is a simplified view of the cassette cross-section indicated in Fig. 11A, showing the flexible tab of the cassette in a flexed position.
Fig. 12 is rear perspective view of a patch panel chassis of the type shown in Figs. 4A-9 with a cassette positioned for insertion into the chassis through the rear of the chassis, and showing a rear cable tie portion of the chassis with a cable attached to the rear cable tie portion.
Fig. 13 is an alternative rear perspective view of the cassette and chassis of Fig. 12 with the\a cassette positioned for insertion into the chassis.
Fig. 14 is a rear perspective view of the patch panel of Fig. 5, including the rear cover, and showing a cable passing through a feedthrough of the rear cover.
Fig. 15 is a front perspective view of a cassette that is an alternative configuration of the cassette of Fig. 1, with cover parts and internal cables of the Fig. 15 cassette not shown.
Fig. 16 is a front perspective view of a cassette 1600 that is another alternative configuration of the cassette of Fig. 1.
Fig. 17 is a front perspective view of a cassette that may be included in a patch panel, and which has twelve front port assemblies and six rear accesses.
Fig. 18 is a front perspective view of a cassette that may be included in a patch panel, and which has four front port assemblies and two rear accesses.
Fig. 19 is a front perspective view of a cassette that may may be included in a patch panel, and which has six front port assemblies and three rear accesses.
Fig. 20 is a front perspective view of a cassette body of an alternative embodiment, with a port assembly of the alternative embodiment positioned for mounting to the cassette body.
Fig. 21 is a front perspective view of the cassette body and port assembly of Fig. 20, with the port assembly mounted to the cassette body.
Fig. 22 is a cross-sectional view of a mounting portion of the Fig. 21 arrangement.

### DETAILED DESCRIPTION

Examples of systems and methods are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features. In the following description, reference is made to the accompanying figures, which form a part thereof. In the figures, similar symbols typically identify similar components, unless context dictates otherwise. Other embodiments may be utilized, and other changes may be made, without departing from the spirit or scope of the subject matter presented herein.

The example embodiments described herein are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein.

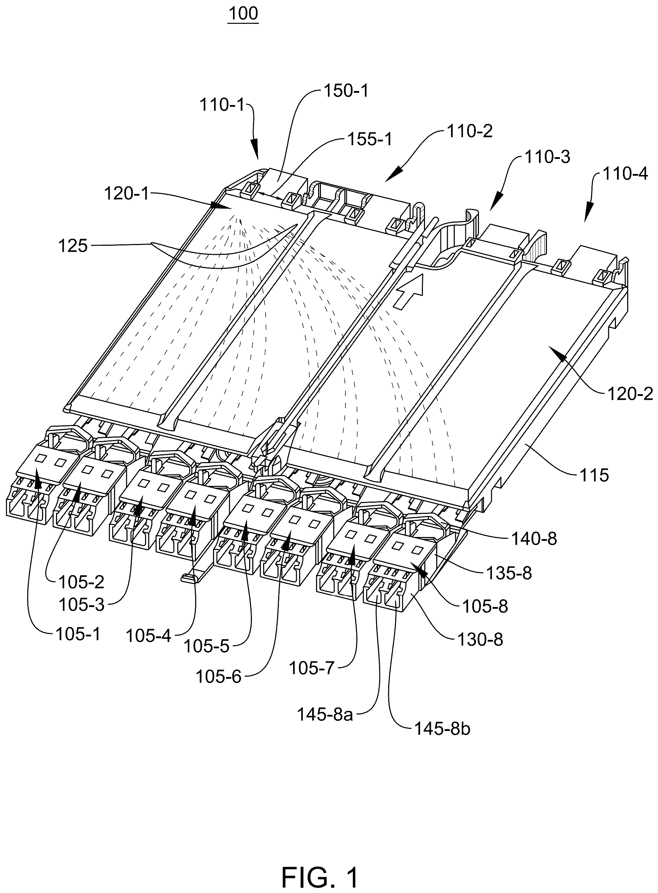

Fig. 1 is a front perspective view of a cassette 100 that may be included in a patch panel according to embodiments. The cassette 100 and patch panel may be configured for implementing fiber optic connections. As can be seen from Fig. 1, the cassette 100 may include eight front port assemblies 105-1 to 105-8, four rear accesses 110-1 to 110-4, a body 115, a first cover part 120-1, and a second cover part 120-2. The cassette 100 may also include one or more internal cables, and in the configuration depicted in Fig. 1 the cassette 100 includes internal cables 125 for coupling the front port assemblies 105-1 to 105-8 to the rear access 110-1. The front port assemblies 105-1 to 105-8 each include a duplex fiber optic adapter, e.g., fiber optic adapter 130-8, an adapter holder, e.g., adapter holder 135-8 and a protection structure, e.g., protection structure 140-8. Each fiber optic adapter includes two LC fiber optic ports, e.g., LC fiber optic ports 145-8a and 145-8b. The fiber optic ports of the cassette 100 (collectively referred to as "fiber optic ports 145") are coupled to rear access 110-1 via respective ones of internal cables 125. In the embodiment of Fig. 1, the rear access 110-1 is in the form of a multi-fiber connector 150-1 secured within in a rear access opening 155-1 and may be, for example, one of a multi-fiber mechanical (MMC) connector, a multi-fiber push on (MPO) connector, or a very small form factor (VSFF) connector such as a simplified network - mechanical transfer (SN-MT) connector.

It should be noted that the front port assemblies 105-1 to 105-8, internal cables 125, and rear accesses 110-1 to 110-4 of Fig. 1 are merely illustrative. That is, the front port assemblies 105-1 to 105-8 are not limited to front port assemblies having LC duplex adapters and may instead include adapters of a different type. Alternatively, one or more of the front port assemblies 105-1 to 105-8 may include a connector rather than an adapter and adapter holder. For instance, front port assemblies 105-8 may include a very small form factor (VSFF) connector, such as a miniature duplex connector (MDC) or simplified network (SN) connector, in place of fiber optic adapter 130-8 and adapter holder 135-8. Moreover, adapters of two or more types may be included in a single cassette. Additionally, it should be noted that the rear accesses 110-1 to 110-4 are not limited to connectors in rear access openings. For example, one or more of the rear accesses 110-1 to 110-4 may take the form of cable passages in rear access openings. Further, the rear accesses of a single cassette may accommodate more than one type of connector or passage. The wide range of applicable front port assembly types and rear access accommodations will be readily appreciated upon review of the present disclosure.

It should be further noted that the internal cables 125 may optionally be included in respective internal cable assemblies. In this regard, such cable assemblies may each include one of the internal cables 125 with a connector attached to each end of the internal cable so that one end of the cable assembly may be plugged into an internal port on one of the front port assemblies 105-1 to 105-8 and the other end of the cable assembly may be plugged into an internal port at one of the rear accesses 110-1 to 110-4.

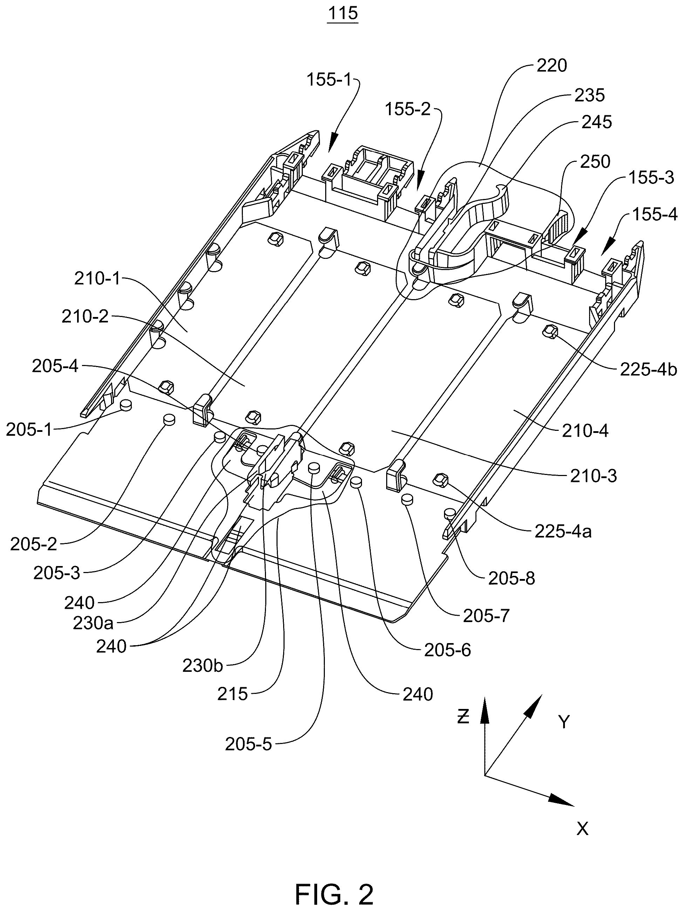

Referring to Fig. 2, the figure is a front perspective view of the body 115 of the cassette 100 of Fig. 1. As can be seen from Fig. 2, the body 115 includes front port assembly fixtures 205-1 to 205-8, accessory sections 210-1 to 210-4, a front groove portion 215, a rear groove portion 220, and rear access openings 155-1 to 155-4. The front port assembly fixtures 205-1 to 205-8 are respectively provided for rotatable mounting of the front port assemblies 105-1 to 105-8. The front port assemblies 105-1 to 105-8 may be snap fit to the front port assembly fixtures 205-1 to 205-8 for rotation in a horizontal plane - where a "horizontal plane" is defined as a plane parallel to the x-y plane shown by the reference frame in Fig.2. Further, the front port assembly fixtures 205-1 to 205-8 may have a circular cross-section when viewed along the z axis and have a t-shaped cross-section when viewed along the x or y axis, so as to allow for rotation of the front port assemblies 105-1 to 105-8 while preventing the front port assemblies 105-1 to 105-8 from falling off the front port assembly fixtures 205-1 to 205-8. By allowing for rotation of the front port assemblies 105-1 to 105-8, access to any one of the front port assemblies 105-1 to 105-8 is facilitated by providing for movement of the other assemblies away from the accessed assembly. The accessory sections 210-1 to 210-4 of the body 115 are provided for securing optional accessory modules within the body 115. By way of example, as shown in Fig. 2, each of the accessory sections 210-1 to 210-4 may include a pair of accessory fixtures, e.g., accessory fixtures 225-4a and 225-4b, each accessory fixture may have a square cross-section when viewed along the z axis and have a t-shaped cross-section when viewed along the x or y axis, and each pair of accessory fixtures may be configured for snap-fitting to an accessory module. The front groove portion 215 and rear groove portion 220 of the body 115 are configured for securing the body 115, and in turn the cassette 100, to a rail of a patch panel chassis.

Regarding the front groove portion 215 and rear groove portion 220, the portions provide for removable securement to a patch panel chassis along all three of the x, y, and z axes. Both the front groove portion 215 and the rear groove portion 220 have a dovetail cross-sectional shape when viewed along the y axis. The dovetail cross-sections mate with a chassis rail that has a complementary dovetail cross-section and extends longitudinally along the y axis. To secure the body 115, and in turn the cassette 100, to the rail, the body 115 is positioned to align the front groove portion 215 and the rear groove portion 220 with the rail, and then the body 115 is slid onto the rail by moving the body 115 in the y direction. In addition, the front groove portion 215 has a pair of front catches, first front catch 230a and second front catch 230b for securing the body 115 in the y direction by engaging with corresponding front recesses on the rail (e.g. by virtue of the first front catch 230a and second front catch 230b being biased in a direction to engage the front recesses). The rear groove portion 220 provides additional securement along the y direction by way of a rear catch 235 engaging with a corresponding rear recess on the rail (e.g. by virtue of the rear catch 235 being biased in a direction to engage the rear recess). When the body 115 is slid onto the rail, the body 115 will slide freely along the y direction until the first front catch 230a and second front catch 230b engage with the corresponding front recesses of the rail and the rear catch 235 engages with the corresponding rear recess on the rail, at which point the body is secured within the chassis along the x, y, and z directions.

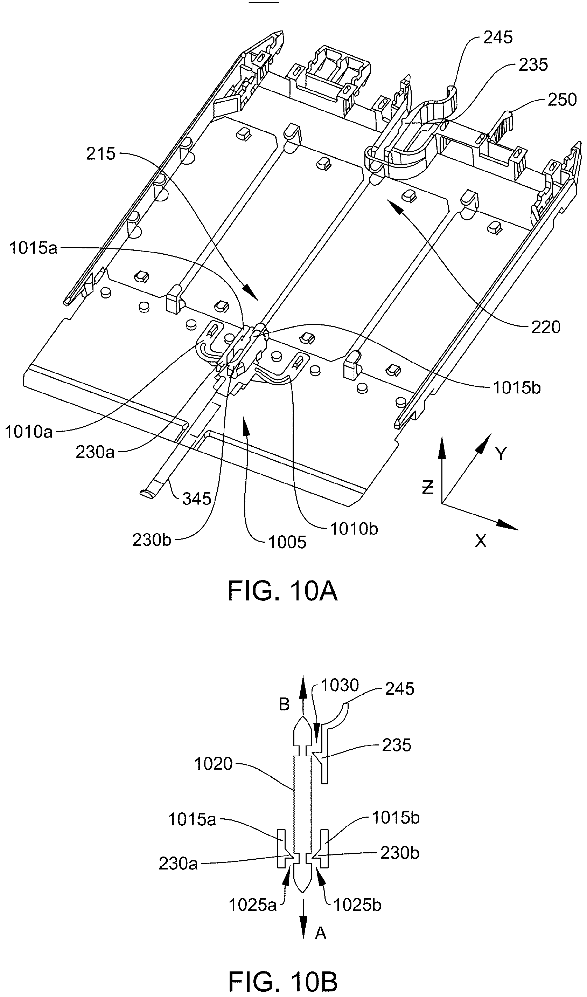

The front groove portion 215 and the rear groove portion 220 are provided with respective mechanisms for removing the body 115 from a chassis rail. The front groove portion mechanism, or "front mechanism," is not shown in Fig. 2, but is later described in detail in connection with Fig. 10A. In any event, Fig. 2 shows an area 240 of the body 115 in which the front mechanism may be accommodated. The front mechanism may manually release the first front catch 230a and the second front catch 230b of the front groove portion 215 from the front recesses of a rail through a cam-type action that moves the first front catch 230a and second front catch 230b out of the front recesses. The rear groove portion mechanism, or "rear mechanism," includes a flexible press 245 and an opposing press 250. The rear mechanism may manually release the rear catch 235 from the rear recess by flexing of the flexible press 245, which may be achieved by grasping the flexible press 245 and the opposing press 250 and urging the flexible press 245 toward the opposing press 250. For example, a user may place the forefinger of one hand on the flexible press 245, place the thumb of the hand on the opposing press 250, and squeeze to move the rear catch 235 away from the rear recess. Once the front mechanism and/or rear mechanism is actuated to release the catches 230a and 230b and/or catch 235 from the corresponding recesses, the body 115 may be removed from the chassis by sliding the body along the rail in the y direction. Notably, the catches 230a, 230b, and 235 are shaped and oriented to allow for removal of the cassette by actuation of just one of the front mechanism or rear mechanism, or by actuation of both the front mechanism and rear mechanism.

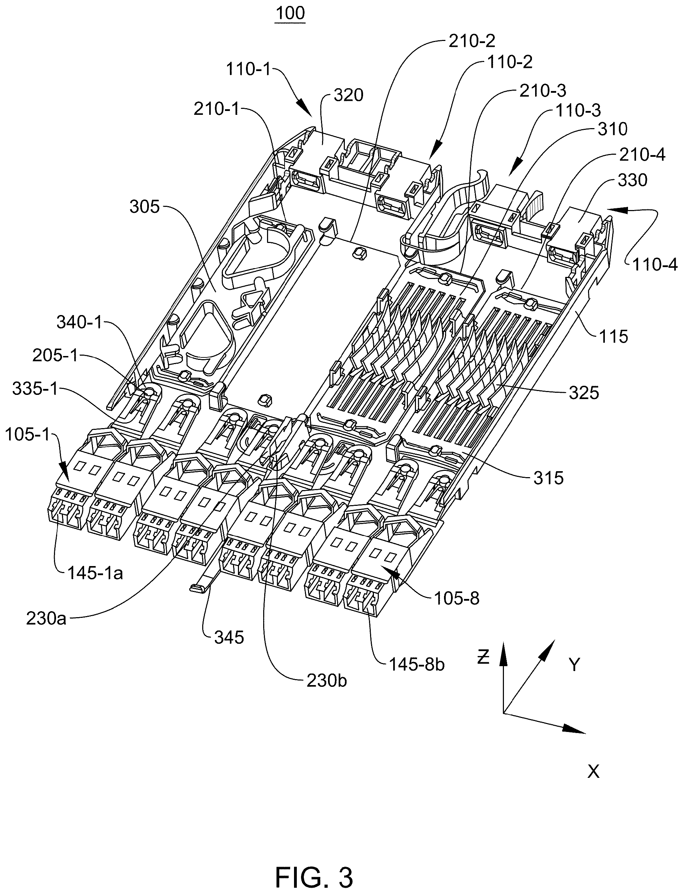

Turning now to Fig. 3, the figure is a front perspective view of the cassette 100 of Fig. 1 with the first cover part 120-1, second cover part 120-2, and internal cables 125 not shown. As configured in Fig. 3, the cassette 100 includes accessory modules 305, 310, and 315. Accessory module 305 is secured within accessory section 210-1 and is a cable routing module, which may serve to route cables from one or more of fiber optic ports 145 to one or more of rear accesses 110-1 to 110-4, and may additionally serve to store cable slack. For example, accessory module 305 may route a cable that is communicatively coupled to a front fiber optic port 145-1a to a cable passage 320 at rear access 110-1 with such cable being connected to an external device and any excess cable not necessary for connecting to the external device being stored in the accessory module 305. Accessory modules 310 and 315 are respectively secured within accessory sections 210-3 and 210-4 and are splice protection tube holder modules, which may serve to hold splice protection tubes associated with splices formed between one or more of cables from fiber optic ports 145 with cables from one or more of rear accesses 110-1 to 110-4. For example, a splice protection tube holding section 325 of accessory module 315 may hold a splice protection tube surrounding a splice between a cable communicatively coupled to front fiber optic port 145-8b and a cable entering the cassette 100 from a cable passage 330 at rear access 110-4.

As can be further seen from Fig. 3, each of the front port assemblies includes a tongue and a tongue surrounding portion for rotatably snap fitting the front port assembly to a corresponding one of port assembly fixtures 205-1 to 205-8. For instance, front port assembly 105-1 includes a tongue portion 335-1 and a tongue surrounding portion 340-1 for rotatably snap fitting the front port assembly 105-1 to front port assembly fixture 205-1 so that front port assembly 105-1 can rotate in a plane parallel to the x-y plane.

Also shown in Fig. 3 is a portion of the front mechanism for releasing the catches 230a and 230b from the front recesses of a rail. The portion shown is a lever 345, which may be grasped by a user to actuate the front mechanism.

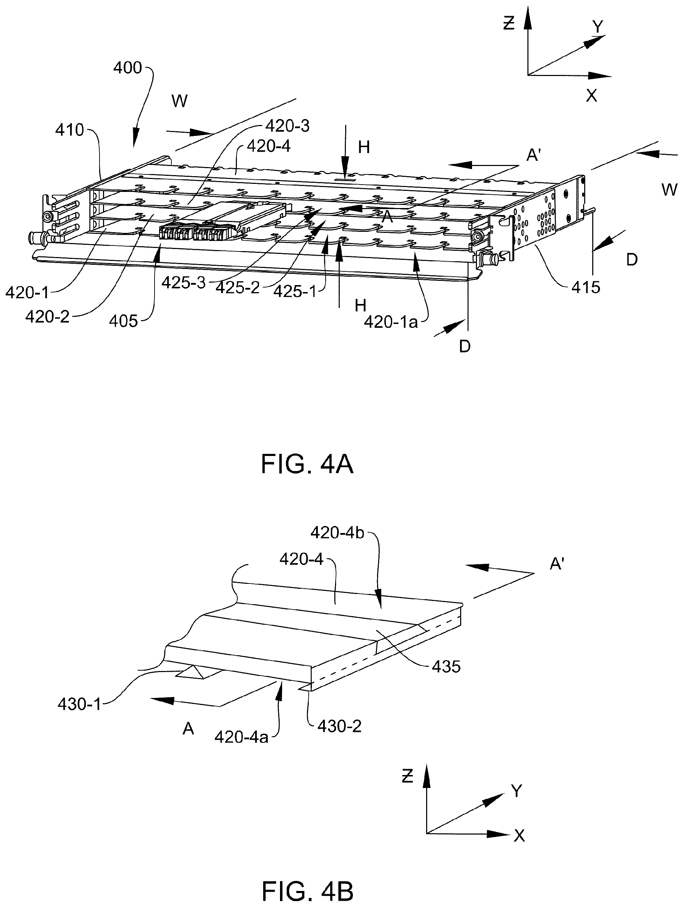

Fig. 4A is a front perspective view of a patch panel chassis 400 and a cassette 405 positioned for insertion into the chassis 400. As can be seen from Fig. 4A, the chassis 400 includes a first sidewall 410, a second sidewall 415, and layers 420-1, 420-2, 420-3, and 420-4. The layers 420-1 to 420-4 are each attached to the first sidewall 410 and the second sidewall 415 and each extend from the first sidewall 410 to the second sidewall 415 along a width dimension (indicated by arrows labeled W) of the chassis 400. The width dimension W extends along the x axis of the reference frame shown in Fig. 4A and is the width dimension W of a patch panel incorporating the chassis 400. The layers 420-1 to 420-4 also extend along a depth dimension (indicated by arrows labeled D) of the chassis 400. The depth dimension D extends along the y axis of the reference frame shown in Fig. 4A and is the depth dimension D of a patch panel incorporating the chassis 400. The layers 420-1 to 420-4 define horizontal openings 425-1, 425-2, and 425-3 of the chassis 400. The horizontal openings are stacked along a height dimension (indicated by arrows H) of the chassis 400 and extend parallel to the x-y plane. The height dimension H extends along the z axis of the reference frame shown in Fig. 4A and is the height dimension H of a patch panel incorporating the chassis 400.

It should be noted that in the present disclosure, the first sidewall 410 and second sidewall 415 are generally planar and are oriented to be spaced from each other and parallel to each other. With reference to the sidewalls 410 and 415, it is noted that the term "horizontal" as used in this disclosure refers to directions perpendicular to planes of the first sidewall 410 and the second sidewall 415, and that the term "vertical" as used in this disclosure refers to directions parallel to the planes of the first sidewall 410 and the second sidewall 415.

It should be further noted that the number of layers and the number of horizontal openings shown in Fig. 4A is illustrative. As alternatives to the Fig. 4A configuration, the number of layers may be 2, 3, or more than 4, and the number of horizontal openings may be 1, 2, or more than 3.

In any event, the chassis 400 is configured to provide for a readily reconfigurable patch panel. In a panel having chassis 400, the cassettes that may be inserted into the horizontal openings 425-1, 425-2, and 425-3 are not limited to any one horizontal size and are easily removed from the chassis 400 through the front or back of the chassis 400. In this regard, at least one of layers 420-2, 420-3, and 420-4 includes one or more rails (not shown) extending along the depth dimension D and configured for attaching to respective patch panel components (e.g., cassette 100) and each of the horizontal openings 425-1, 425-2, and 425-3 has no vertical support other than the first sidewall 410 and the second sidewall 415. The absence of internal vertical supports allows the cassettes inserted in the chassis 400 to vary without constraint, as long as the cassettes for any one of the horizontal openings 425-1, 425-2, and 425-3 does not exceed the width dimension W of the chassis 400. To illustrate how the rails may be arranged, reference is made to Fig. 4B.

Fig. 4B is a perspective detail view of cross-section A-A' indicated in Fig. 4A. As can be seen from Fig. 4B, two rails 430-1 and 430-2 are located at a lower face 420-4a of layer 420-4, and a layer reinforcement 435 may extend in the D dimension from the lower face 420-4a of the layer 420-4 to an upper face 420-4b of layer 420-4. The rails 430-1 and 430-2 may be attached to the lower face 420-4a of layer 420-4 or they may be an integral part of layer 420-4. For example, the layer 420-4 may be made of plastic and the rails 430-1 and 430-2 may be molded as part of the layer 420-4. The layer reinforcement 435 may be, for example, stainless steel, and is included to provide the layer 420-4 with added rigidity so that the layer 420-4 does not droop along the width dimension W when attached to the sidewalls 410 and 415. As can be seen, the layer reinforcement 435 may be secured to the layer 420-4 through a dovetail arrangement, although one or more other techniques for securing the layer reinforcement 435 may be used as an alternative to the dovetail arrangement or in addition to the dovetail arrangement. By molding the layer 420-4 with integral rails from plastic and molding the plastic onto the layer reinforcement 435, the layer 420-4 is produced at a low cost while providing the layer 420-4 with desirable strength and resistance to bending forces.

Each of layers 420-3 and 420-2 may take a form that is the same as layer 420-4 or may take a from that is different than layer 420-4. Regarding layer 420-1, the layer is not provided with rails as layer 420-1 has a lower face 420-1a that serves as the bottom of the chassis 400.

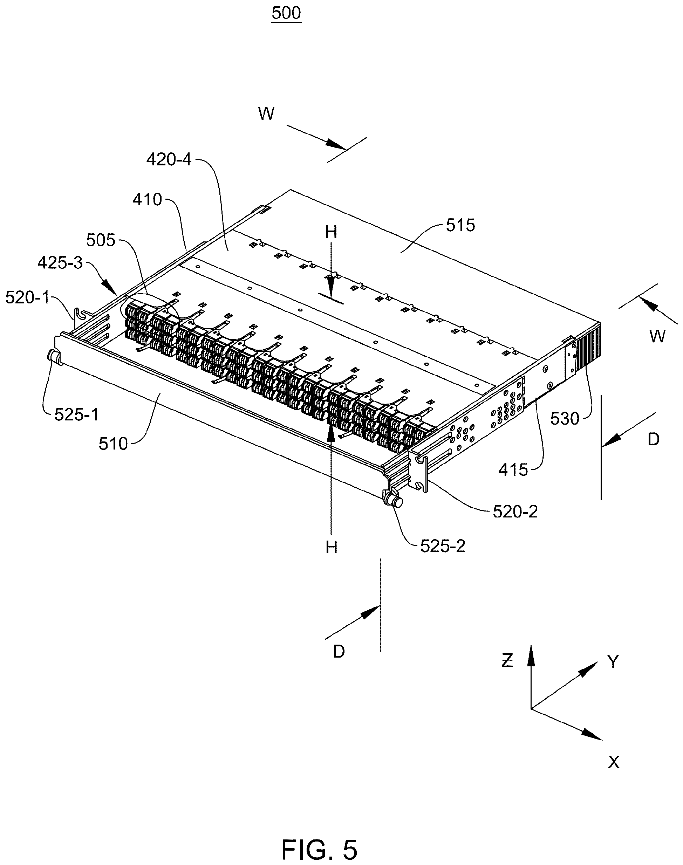

Turning now to Fig. 5, the figure is a front perspective view of a patch panel 500 having a chassis of the type shown in Fig. 4A and eighteen cassettes of the type shown in Fig. 4A. In the Fig. 5 configuration, there are six cassettes in each of the three horizontal openings, e.g., cassette 505 in opening 425-3. As can be from Fig. 5, the chassis may include a front cover 510, a rear cover 515, bracket 520-1, and bracket 520-2. The front cover 510 may be rotatably mounted to the first side wall 410 and second sidewall 425 by respective pins 525-1 and 525-2. The front cover 510 as shown in Fig. 5 is in a closed position. To access the cassettes, a user simply rotates the front cover 510 about pins 525-1 and 525-2. The rear cover 515 includes a feedthrough 530, which allows cables to pass through to the rear of the patch panel 500 but prohibits dirt or other elements from getting into the rear of the patch panel 500.

The patch panel 500 may have a one rack unit size. A rack unit (RU) size is typically defined as 1.75 inches of H dimension space. Moreover, for 19-inch rack frames, a 1 (one) RU patch panel occupies 1.75 inches of H dimension by about 17 inches of W dimension, or when the width of the mounting portions is included, 1.75 inches of H dimension by about 19 inches of W dimension. Nevertheless, a 1 RU patch panel may occupy other dimensions. For example, for 23-inch rack frames, a 1 RU patch panel occupies 1.75 inches of H dimension by about 21 inches of W dimension, or when the width of the mounting portions is included, 1.75 inches of H dimension by about 23 inches of W dimension. The patch panel 500 may have a 1 RU size in the H dimension and W dimension. That is, in one embodiment the patch panel 500 may extend 1.75 inches in the H dimension and about 19 inches in the W dimension, when the W extent includes the width of the brackets 520-1 and 520-2. In another embodiment, the patch panel 500 may extend 1.75 inches in the H dimension and about 23 inches in the W dimension, when the width of the W extent includes the width of the brackets 520-1 and 520-2.

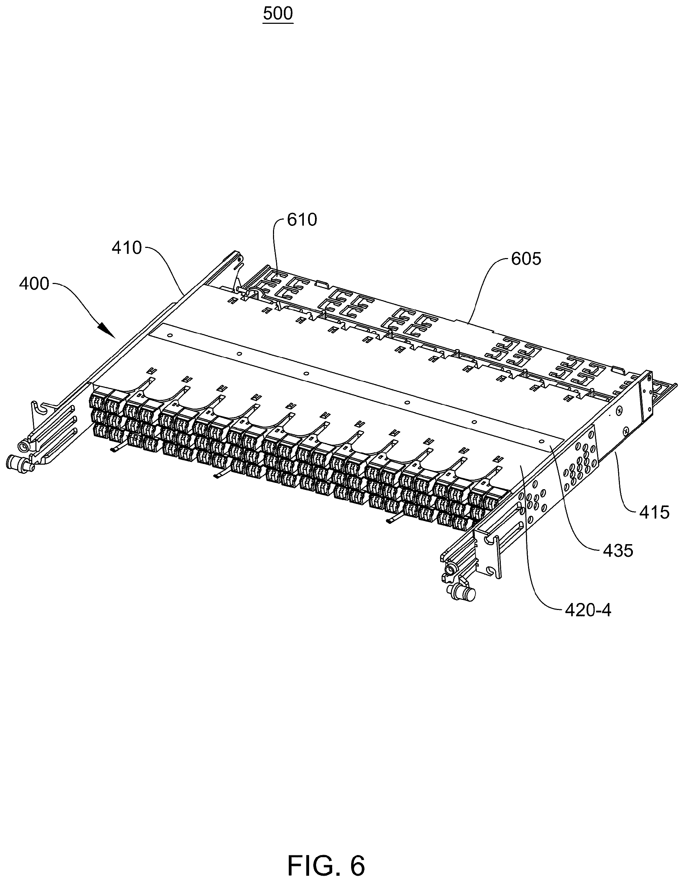

Referring now to Fig. 6, the figure is a front perspective view of the patch panel 500 of Fig. 5 with the front cover 510 and the rear cover 515 removed. As can be seen from Fig. 6, the chassis 400 includes a rear cable tie portion 605. The rear cable tie portion 605 includes anchors, e.g. anchor 610, which may serve to anchor cables extending to and from the rear of the patch panel 500 by fastening the cables to the anchors using cable ties. The rear cable tie portion 605 is an optional element of the patch panel 500. Also, the rear cable tie portion 605 and may have a single anchor instead of multiple anchors.

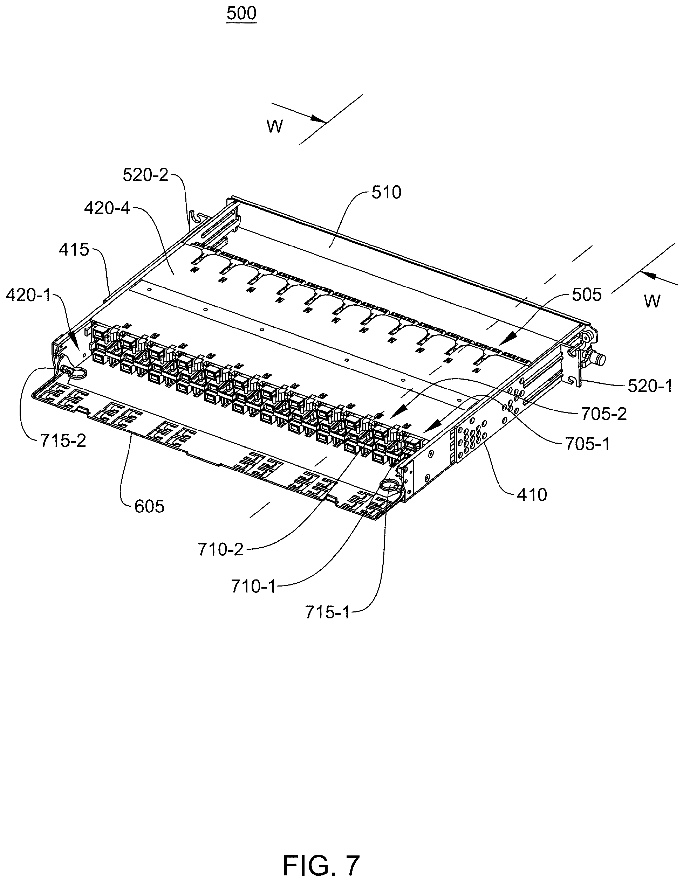

Fig. 7 is a rear perspective view of the patch panel 500 of Fig. 5 with the rear cover 515 removed. As can be seen from Fig. 7, the cassettes of the patch panel 500 have rear access configurations that are different from the rear access configurations of the cassette 100 of Fig. 1. Each of the cassettes in Fig. 7 includes only two rear accesses. By way of example, cassette 505 includes rear accesses 705-1 and 705-2, with the rear accesses 705-1 and 705-2 respectively including multi-fiber connectors 710-1 and 710-2. As can be further seen from Fig. 7, the rear cable tie portion 605 may be rotatable. To allow for such rotation, the rear cable tie portion 605 is secured to the first side 410 of the patch panel 500 by a first pin 715-1 and secured to the second side 415 of the patch panel 500 by a second pin 715-2. The rotatability of the rear cable tie portion 605 facilitates access to the cassettes via the rear of the patch panel 500. For example, the rear cable tie portion 605 may be rotated clockwise - when viewed from side 410 and along the width dimension W - to facilitate rear removal of cassettes from horizontal opening 420-1

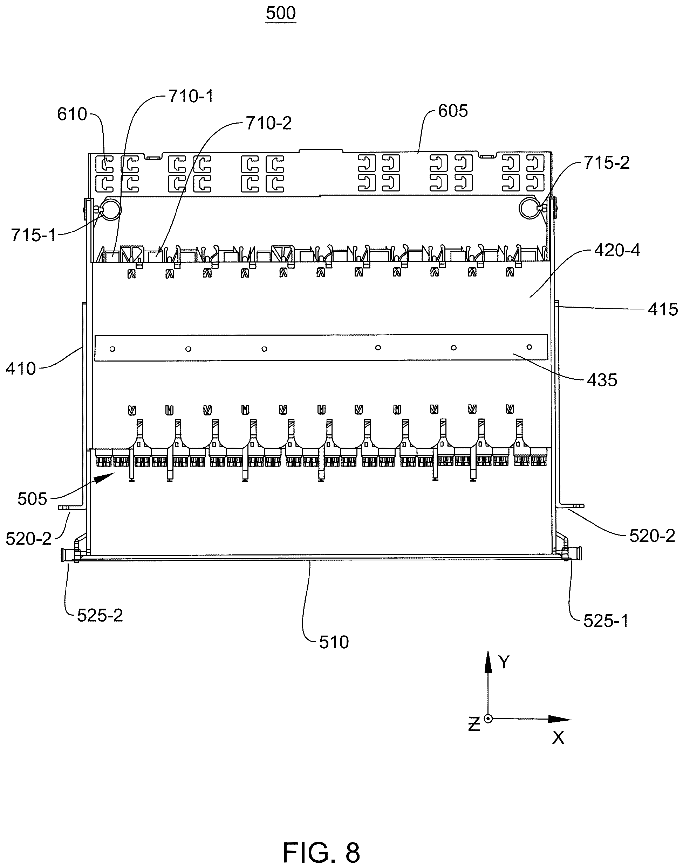

Fig. 8 is a top view of the patch panel 500 of Fig. 5 with the rear cover 515 removed. The figure shows the arrangement of elements of patch panel 500 when looking along the height dimension H (corresponding to the z axis of the reference frame provided in the Fig. 8) and down on the layer 420-4.

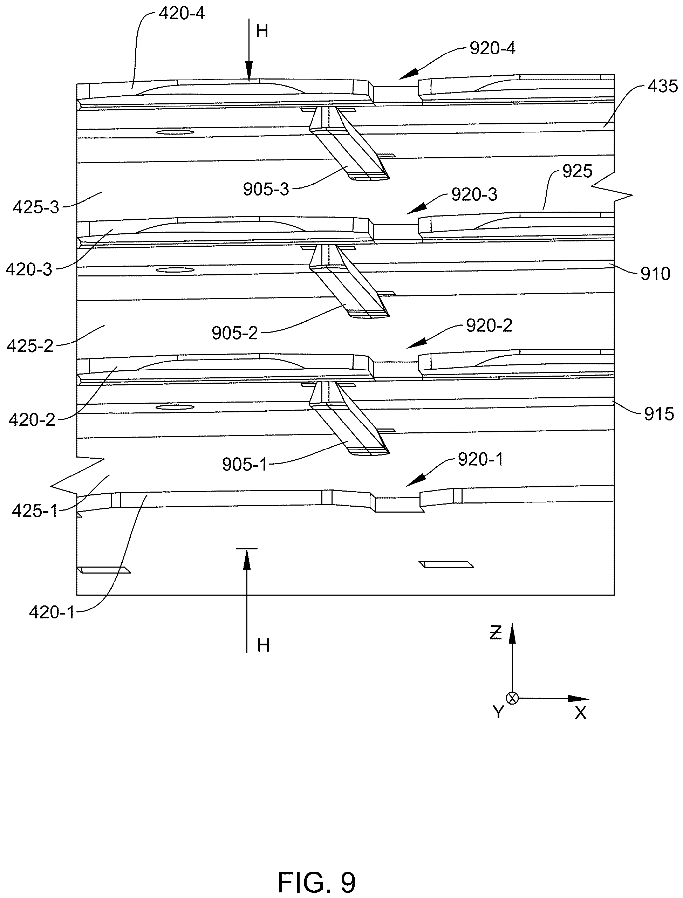

Turning to Fig. 9, the figure is a detail view of a portion of the patch panel chassis 400 of Fig. 4A, with a focus on rail structure and rail positioning according to an embodiment. Fig. 9 shows rails 905-1, 905-2, and 905-3 attached respectively to layers 420-2, 420-3, and 420-4. As can be seen from Fig. 9, each of the rails 905-1, 905-2, and 905-3 has a dovetail cross-section along the width dimension (corresponding to the x axis of the reference frame provided in the Fig. 9). As can also be seen from Fig. 4A, layers 420-2 and 420-3 include layer reinforcements, respectively layer reinforcements 910 and 915, similar to the layer reinforcement 435 of layer 420-4. Further, the layers 420-1 to 420-4 include respective guiding notches 920-1 to 920-4. The guiding notches 920-1 to 920-4 provide for visual and physical alignment of cassettes with the rails 905-1 to 905-3, along the width dimension W, when the cassettes are inserted into the horizontal openings 425-1 to 425-3. Visual and physical alignment for a rail may be provided by one or both of the guiding notch of the layer above the rail and the guiding notch of the layer below the rail. For example, when inserting a cassette onto rail 905-3 a user may observe guiding notch 920-4 as a visual reference for positioning the cassette to slide onto the rail 905-3, and moreover, when inserting the cassette onto the rail 905-3 a part of the cassette structure may interface with guiding notch 920-3 to provide physical guidance of the cassette onto the rail 905-3. In any event, it should be noted that in some embodiments not all the layers include guiding notches, and that in some embodiments the number of guiding notches may vary among the layers.

In addition, it is noted that each of cassettes inserted onto rails 905-1 to 905-3 may be supported along the height dimension H by both the layer above the cassette and the layer below the cassette. For example, a cassette inserted onto rail 905-3 is supported from above by hanging on rail 905-3 and may be supported from below by sitting on an upper face 925 of layer 420-3. Supporting the cassette from both above and below allows for tighter constraint of the cassette and greater overall structural stability for the patch panel.

Regarding insertion and removal of cassettes from the patch panel chassis 400, additional details are discussed in connection with Figs. 10A to 11C.

Fig. 10A is a front perspective view of the cassette body 115 of Fig. 2, showing a front mechanism 1005 for manipulating the front groove portion 215 of the body 115. The front mechanism 1005 includes the lever 345 (as shown in Fig. 3), and a first arm 1010a and a second arm 1010b connected to the lever 345. The lever 345 may be manipulated by a user to move the arms 1010a and 1010b which, in turn, may move the first front catch 230a and the second front catch 230b out of respective front recesses on a rail to which the cassette body 115 is attached. The lever 345 may operate to move the first front catch 230a and the second front catch 230b out of the respective front recesses through contact of the first arm 1010a with a first part 1015a of the front groove portion 215 and contact of the second arm 1010b with a second part 1015b of the front groove portion 215, with the first front catch 230a being an integral portion of the first part 1015a and the second front catch 230b being an integral portion of the second part 1015b. An arrangement of the first part 1015a, the second part 1015b, an illustrative rail 1020 is shown in Fig. 10B.

Fig. 10B is a view of parts of the front groove portion 215 and the rear groove portion 220 of the Fig. 2 cassette body 115, and the rail 1020, showing how the front groove portion 215 and rear groove portion 220 engage the rail 1020 to secure the corresponding cassette along the longitudinal direction of the rail 220. Fig. 10B is a view as seen along the z axis of the reference frame shown in Fig. 10A and from above the body 115. As shown in Fig. 10B, when the body 115 is engaged with rail 1020, the first front catch 230a engages with a first front recess 1025a of the rail 1020, the second front catch 230b engages with a second front recess 1025b of the rail 1020, and the rear catch 235 engages with a rear recess 1030 of the rail 1020. When the front mechanism 1005 is operated to disengage catches 230a and 230b from front recesses 1025a and 1025b, the body 115 may be removed from the rail by urging the body 115 in direction A - along the y axis as indicated in the reference frame of Fig. 10A. The rear catch 235 does not prevent such removal as the rear catch 235 is shaped to allow the rear catch 235 to slide out of rear recess 1030 without having to operate the flexible press 245. Similarly, when the rear press 245 is operated to disengage catch 235 from rear recess 1030, the body 115 may be removed from the rail 1020 by urging the body 115 in direction B along the y axis as the front catches 230a and 230b are shaped to allow for removal along direction B without operation of the front mechanism 1005.

It should be noted that the presently disclosed technology is not limited to the catch and recess structures described in Fig. 10B. For example, the technology may be implemented using a single front catch and a single front recess instead of using the two front catches 230a and 230b and the two front recesses 1025a and 1025b. In one such embodiment, the front catch 230a may be included for mating with front recess 1025a, while front catch 230b is not included. Using the single catch 230a instead of both catches 230a and 230b avoids the possibility of one of the catches 230a and 230b remaining in its recess when the front mechanism 1005 is used for disengagement and applies uneven forces to the catches 230a and 230b. Further, in the one catch embodiment, the front recess 1025b may or may not be included. Still further, in the one catch embodiment, the second part 1015b of the of the front groove portion 215 may or may not be formed as less pliant than the first part 1015a of the of the front groove portion 215, a less pliant second part 1015b facilitating removal of the single front catch 230a from front recess 1025a by supporting the front mechanism 1005 to move the catch 230a instead of allowing the front mechanism 1005 to be deflected away from the catch 230a. By way of additional example, the presently disclosed technology may be implemented using two rear catches and two rear recesses instead of using the single rear catch 235 and the single rear recess 1030.

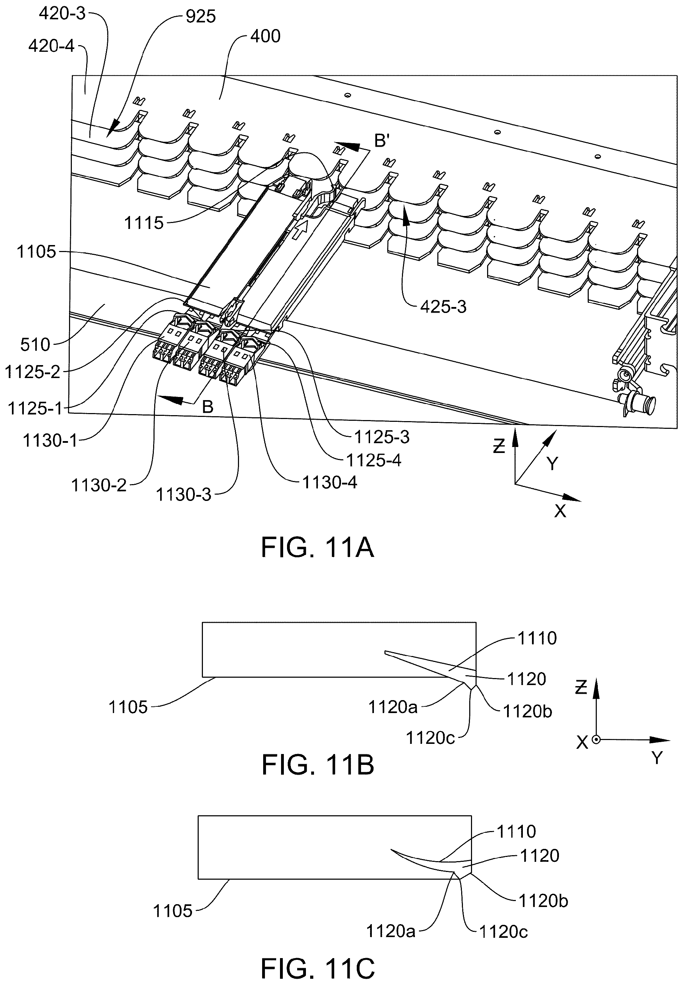

Referring now to Fig. 11A, the figure is a front perspective view of the patch panel chassis 400 with a cassette 1105 positioned for insertion onto a rail of layer 420-4 of the chassis 400. The cassette 1105 includes a flexible tab 1110 (shown in Figs. 11B and 11C) for engaging with a guiding notch, e.g., guiding notch 1115 on layer 420-3 of chassis 400. The flexible tab 1110 may also engage with a recess in layer 420-3 (recess not shown) when the cassette 1105 is positioned in the chassis 400. The configuration and operation of the flexible tab 1110 is described in connection with Figs. 11B and 11C.

Fig. 11B is a simplified view of the cassette cross-section B-B' indicated in Fig. 11A, showing the flexible tab 1110 of the cassette 1105 in an unflexed position. The flexible tab 1110 is in the unflexed position prior to beginning insertion of the cassette 1105 into horizontal opening 425-3. Upon beginning insertion, a projecting portion 1120 of the flexible tab 1110 may be placed in guiding notch 1115 so as to allow the guiding notch 1115 to guide the cassette 1105 into horizonal opening 425-3 by physical contact between the projection portion 1120 and the guiding notch 1115. Further, the guiding notch 1115 provides such guidance along the depth dimension D of the chassis 400 - along the y-axis direction as indicated in the reference frame provided with Figs. 11B and 11C - until a point is reached along the depth dimension D at which the cassette 1105 has engaged the rail of layer 420-4. After the cassette 1105 has engaged the rail, the y-axis extent of the guiding notch 1115 is reached and the flexible tab 1110 is forced into a flexed position, as shown in Fig. 11C, by contacting the upper face 925 of layer 420-3. Then, as the cassette is moved farther along the y-axis direction, the flexible tab 1110 engages with the recess in layer 420-3 and returns to the unflexed position with the projecting portion 1120 sitting in such recess to help stabilize the cassette 1105 within the chassis 400.

As can be noted from Figs. 11B and 11C, the projecting portion 1120 has a first y-axis end 1120a, a second y-axis end 1120b, and a y-axis center 1120c, and is sloped from the y-axis center 1120c to the first y-axis end 1120a and from the y-axis center 1120c to the second y-axis end 1120b. The slope from the y-axis center 1120c to the first y-axis end 1120a is such that the z-axis extent of the of the projecting portion 1120 lessens as the projecting portion 1120 is traversed from the y-axis center 1120c to the first y-axis end 1120a. Similarly, the slope from the y-axis center 1120c to the second y-axis end 1120b is such that the z-axis extent of the of the projecting portion 1120 lessens as the projecting portion 1120 is traversed from the y-axis center 1120c to the second y-axis end 1120b. In this manner, the projecting portion 1120 is shaped to inhibit the first y-axis end 1120a and the second y-axis end 1120b from getting caught on an edge of a chassis layer during insertion or removal of cassette 1105 from the chassis 400. For example, the slope from the y-axis center 1120c to the second y-axis end 1120b helps prevent the second y-axis end 1120b from getting caught on the edge of guiding notch guiding 1115 during frontal insertion of the cassette 1105 into the chassis 400, and helps prevent the second y-axis end 1120b from getting caught on the edge of the recess in layer 420-3 during rear removal of the cassette 1105 from the chassis 400; and the slope from the y-axis center 1120c to the first y-axis end 1120a helps prevent the first y-axis end 1120a from getting caught on the edge of the recess in layer 420-3 during frontal removal of the cassette 1105 from the chassis 400.

Additionally noted in connection with Fig. 11A are protection structures 1125-1 to 1125-4. The protection structures 1125-1 to 1125-4 are respectively provided for port assemblies 1130-1 to 1130-4 of the cassette 1105 and protect the port assemblies 1130-1 to 1130-4 from damage during insertion of the cassette 1105 into chassis 400 and/or during removal of the cassette 1105 from chassis 400. For example, protection structures 1125-1 to 1125-4 prevent the port assemblies 1130-1 to 1130-4 from contacting layer 420-4 upon insertion of the cassette 1105 into chassis 400. As can be seen from Fig. 11A, the protection structures 1125-1 to 1125-4 may be respective integral parts of the port assemblies 1130-1 to 1130-4, and the port assemblies 1130-1 to 1130-4 may be rotatable. As can be further seen from Fig. 11A, each of the protection structures 1125-1 to 1125-4 may be sloped along each of its center to end directions such that the z-axis extent of the protection structure lessens as the protection structure is traversed from its center to either end. The sloped configuration of the protection structures 1125-1 to 1125-4 respectively inhibit the port assemblies 1130-1 to 1130-4 from getting caught on a guide rail of the chassis 400 during insertion of the cassette 1105 into the chassis 400 or during removal of the cassette 1105 from the chassis 400. That is, for example, if port assembly 1130-1 is in a rotated position that would cause the port assembly 1130-1 to catch on a rail during frontal insertion of the cassette 1105 into the chassis 400, the protection structure 1125-1 contacts the rail during such insertion and causes the port assembly 1130-1 to rotate away from the position that would cause the port assembly 1130-1 to catch.

Also noted in connection with Figs. 10A-11C is that patch panels of the presently disclosed technologies may be configured such that the rails of a chassis do not interfere with the rotation of port assemblies. That is, for instance, the rails (e.g., rail 1020) of a chassis (e.g., chassis 400) may be constructed such that after a cassette (e.g., cassette 100 or cassette 1105) has been inserted onto the rail, the rail does not extend far enough toward the rotatable port assemblies (e.g., port assemblies 1130-1 to 1130-4) to cause undesirable interfere with rotation of the port assemblies.

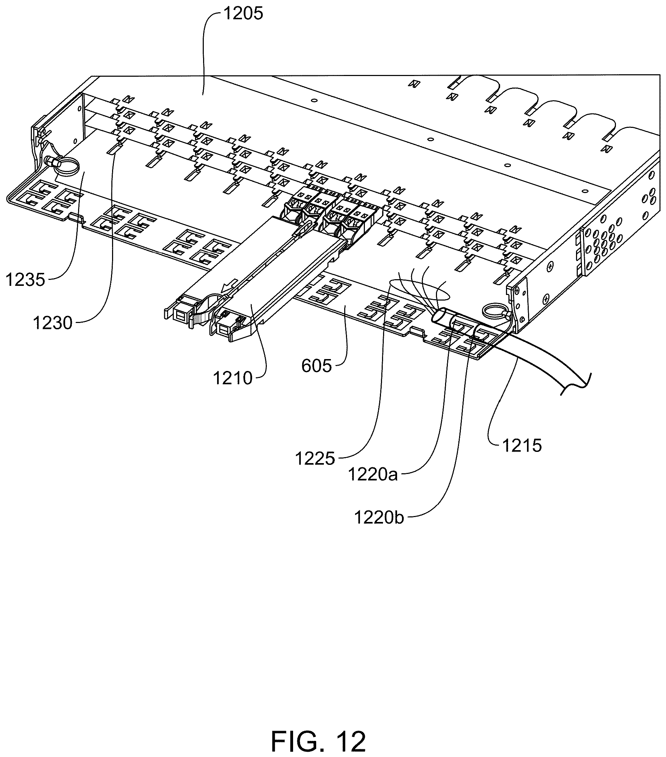

Turning now to Fig. 12, the figure is a rear perspective view of a patch panel chassis 1205 of the type shown in Figs. 4A-9 with a cassette 1210 positioned for insertion into the chassis 1205 through the rear of the chassis. Also shown in Fig. 12 is a cable 1215 attached to the rear cable tie portion 605 of the chassis 1205 by cable ties 1220a and 1220b. The cable 1215 is a multi-fiber cable and individual fibers from the cable 1215 (e.g., fibers 1225) may be selectively coupled to rear accesses of cassettes within chassis 1205. In addition, Fig. 12 depicts recesses (e.g., recess 1230) for accommodating flexible tabs of cassettes (e.g., flexible tab 1120 of Figs. 11B and 11C) within a layer 1235 of the chassis.

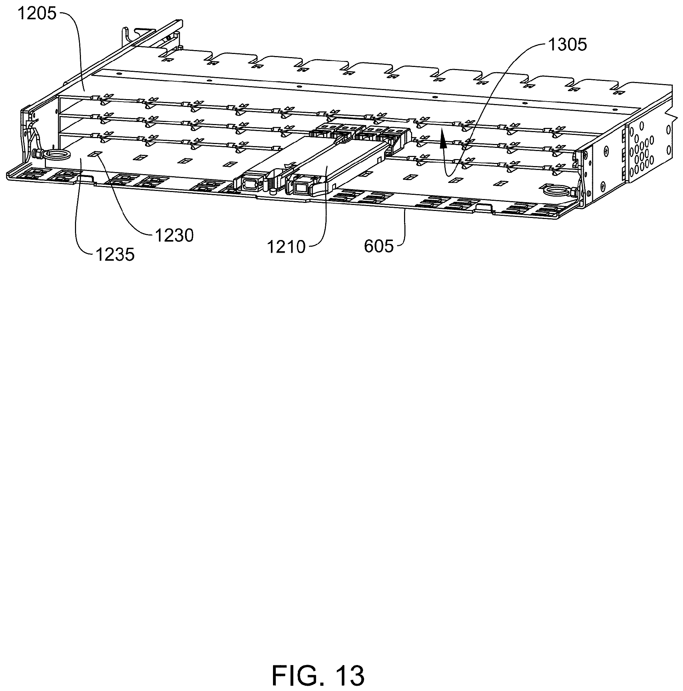

Fig. 13 is an alternative rear perspective view showing the cassette 1210 and chassis 1205 of Fig. 12 upon positioning of the cassette for insertion into the chassis 1205 through the rear of the chassis 1205. As can be seen from Fig. 13, the cassette 120 may be inserted into a horizontal opening 1305 of the chassis 1205.

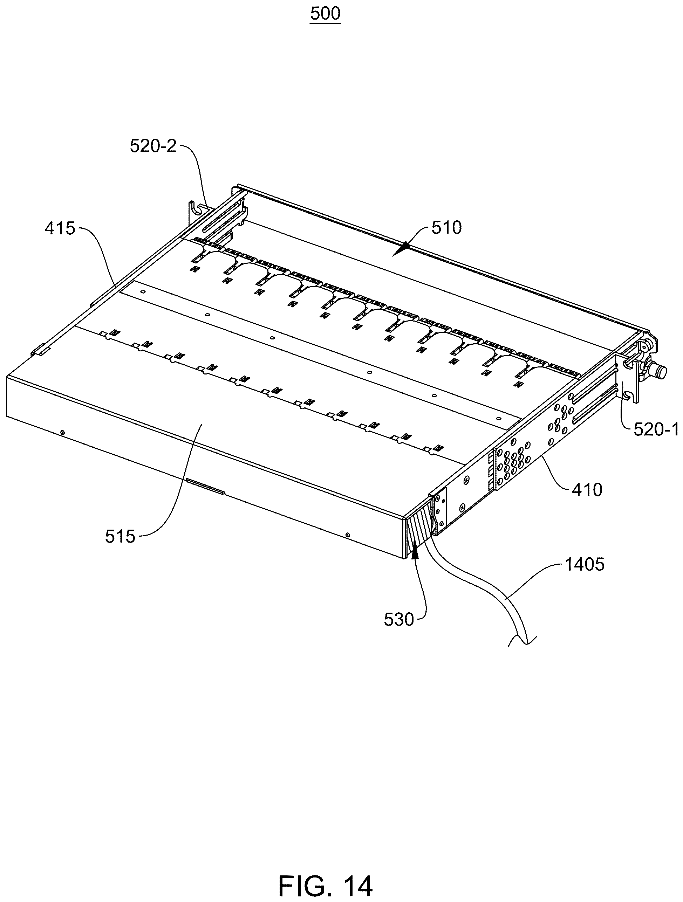

Fig. 14 is a rear perspective view of the patch panel 500 of Fig. 5, including the rear cover 515, and showing a cable 1405 passing through the feedthrough 530 of the rear cover *515.*

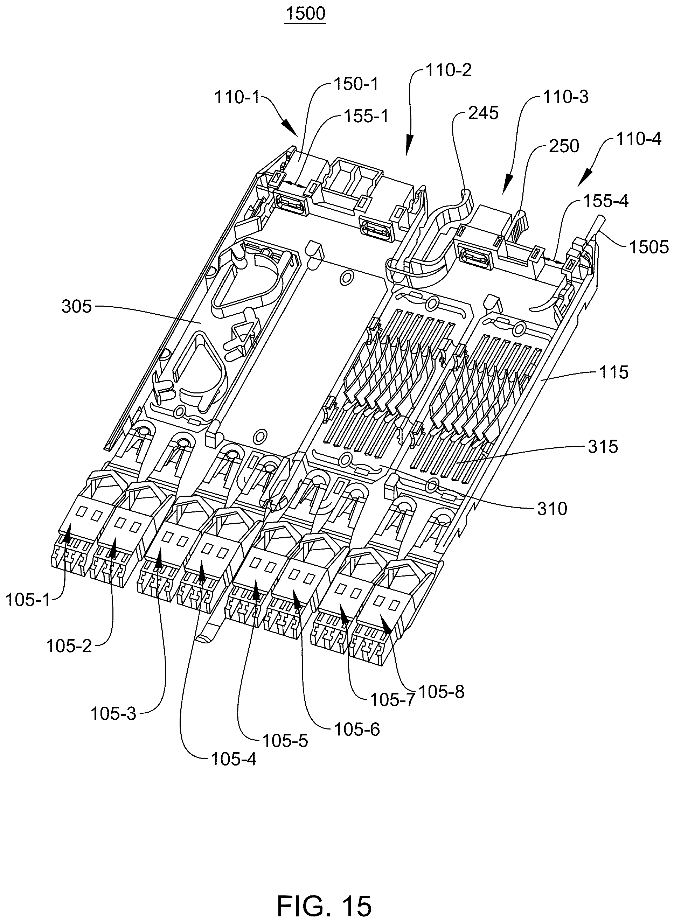

Referring now to Figs. 15-19, several embodiments of cassettes according to the presently disclosed technology are described.

Fig. 15 is a front perspective view of a cassette 1500 that is an alternative configuration of the cassette 100 of Fig. 1, with cover parts and internal cables of the cassette 1500 not shown. As can be seen from Fig. 15, cassette 1500 includes front port assemblies 105-1 to 105-8, rear accesses 110-1 to 110-4, body 115, and accessory modules 305, 310, and 315. The cassette 1500 differs from the cassette 100 of Fig. 1 in that the rear access 110-4 includes a rear access opening 155-4 that does not accommodate a connector, but rather, is left open to allow cables (e.g., cable 1505) to freely pass through the rear access opening 155-4.

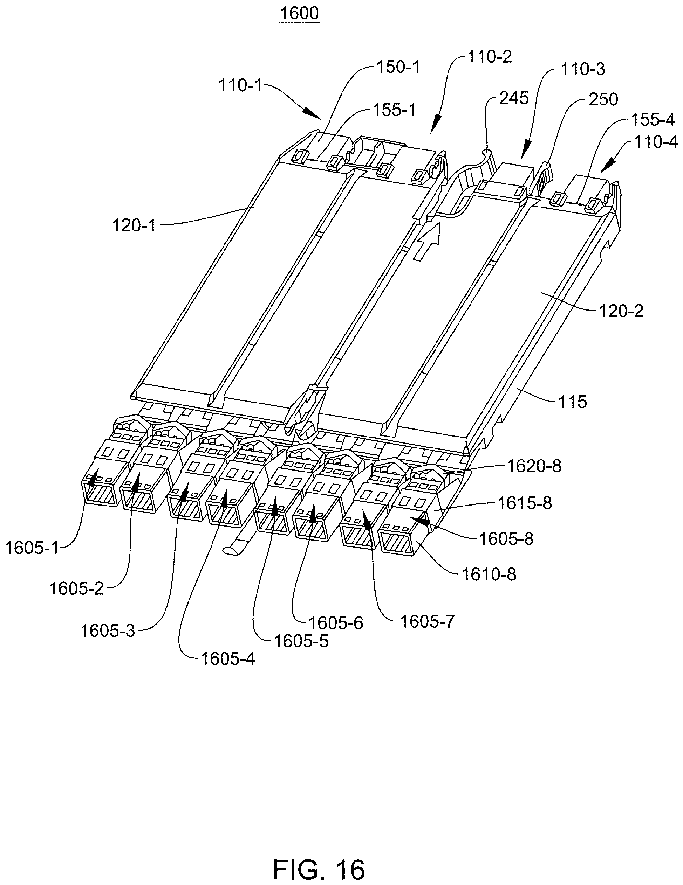

Fig. 16 is a front perspective view of a cassette 1600 that is another alternative configuration of the cassette 100 of Fig. 1. As can be seen from Fig. 16, cassette 1600 includes front port assemblies 1605-1 to 1605-8, rear accesses 110-1 to 110-4, body 115, first cover part 120-1, and second cover part 120-2. The cassette 1600 differs from the cassette 100 of Fig. 1 in that the front port assemblies 1605-1 to 1605-8 each include a mini duplex connector (MDC) fiber optic adapter, e.g., adapter 1610-8, rather than an LC duplex adapter. The MDC adapters of cassette 1600 each accommodate up to three MDCs, with each MDC being a VSFF two-fiber connector. Thus, for example, MDC adapter 1610-8 may provide connections for up to six fiber optic cables, three times as many connections as provided by the LC adapter 130-8 of the Fig. 1 configuration. In addition, it is noted that the cassette 1600 may include adapter holders, e.g., adapter holder 1615-8, that are the same or different than the adapter holders of the Fig. 1 configuration, as the structure of the MDC adapters may allow for fixation within the same adapter holders as Fig. 1 or may require the use of different adapter holders. In any event, the front port assemblies 1605-1 to 1605-8 may each rotate in the same manner as the front port assemblies 105-1 to 105-8 of Fig. 1, and may each include a protection structure, e.g., protection structure 1620-8, similar to the Fig. 1 protection structures, e.g., protection structure 140-8.

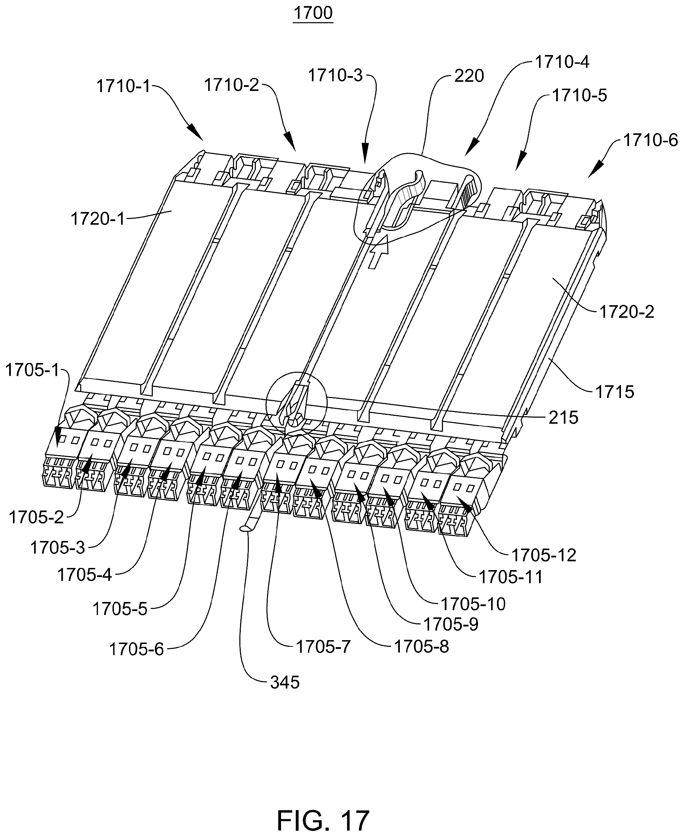

Fig. 17 is a front perspective view of a cassette 1700 that may be included in a patch panel, and which has twelve front port assemblies 1705-1 to 1705-12 and six rear accesses 1710-1 to 1710-6. The cassette 1700 may also include lever 345, front groove portion 215, rear groove portion 220, a body 1715, a first cover part 1720-1, and a second cover part 1720-2. The front port assemblies 1705-1 to 1705-12 may each be of the same type as described in connection with cassette 100, and the rear accesses 1710-1 to 1710-6 may each be of the same type as described in connection with cassette 100. Further, the lever 345, front groove portion 215, rear groove portion 220 may be of the same type as described in connection with cassette 100. However, the body 1715, the first cover 1720-1, and the second cover 1720-2 of cassette 1700 differ respectively from the body 115, the first cover 120-1, and the second cover 120-2 of cassette 100 in order to accommodate the increased number of front port assemblies and rear accesses of cassette 1700.

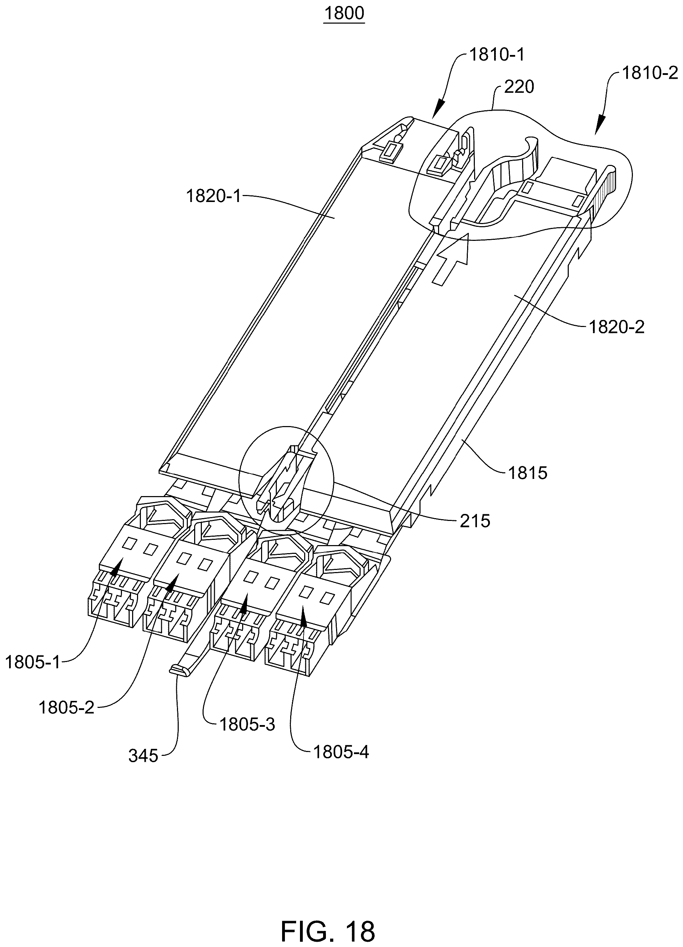

Fig. 18 is a front perspective view of a cassette 1800 that may may be included in a patch panel, and which has four front port assemblies 1805-1 to 1805-4 and two rear accesses 1810-1 and 1810-2. The cassette 1800 may also include lever 345, front groove portion 215, rear groove portion 220, a body 1815, a first cover part 1820-1, and a second cover part 1820-2. The front port assemblies 1805-1 to 1805-4 may each be of the same type as described in connection with cassette 100, and the rear accesses 1810-1 and 1810-2 may each be of the same type as described in connection with cassette 100. Further, the lever 345, front groove portion 215, rear groove portion 220 may be of the same type as described in connection with cassette 100. However, the body 1815, the first cover 1820-1, and the second cover 1820-2 of cassette 1800 differ respectively from the body 115, the first cover 120-1, and the second cover 120-2 of cassette 100 in order to accommodate the decreased number of front port assemblies and rear accesses of cassette 1800.

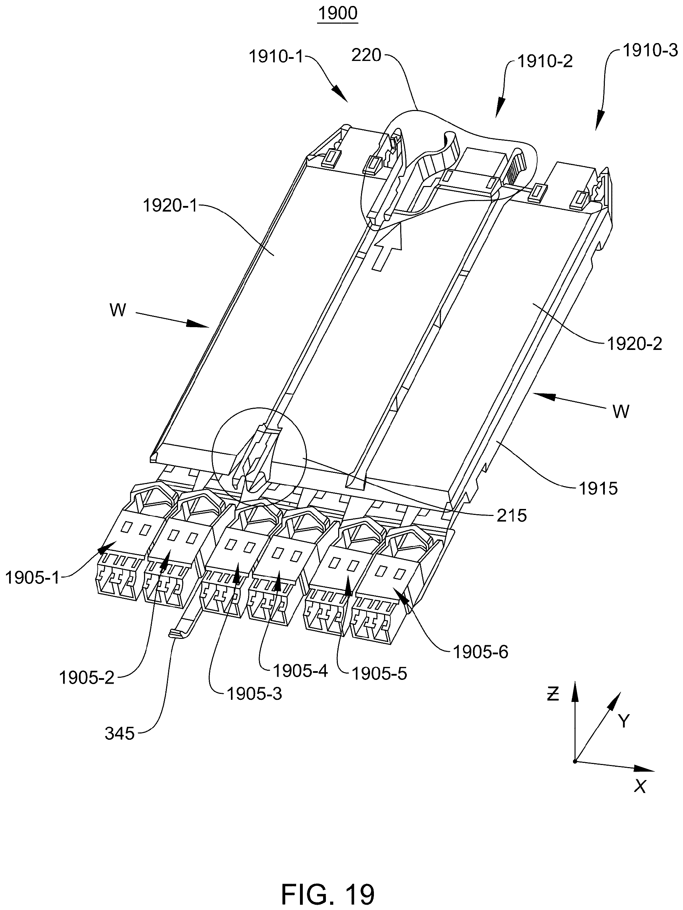

Fig. 19 is a front perspective view of a cassette 1900 that may may be included in a patch panel, and which has six front port assemblies 1905-1 to 1905-6 and three rear accesses 1910-1 to 1910-3. The cassette 1900 may also include lever 345, front groove portion 215, rear groove portion 220, a body 1915, a first cover part 1920-1, and a second cover part 1920-2. The front port assemblies 1905-1 to 1905-6 may each be of the same type as described in connection with cassette 100, and the rear accesses 1910-1 to 1910-3 may each be of the same type as described in connection with cassette 100. Further, the lever 345, front groove portion 215, rear groove portion 220 may be of the same type as described in connection with cassette 100. However, the body 1915, the first cover 1920-1, and the second cover 1920-2 of cassette 1900 differ respectively from the body 115, the first cover 120-1, and the second cover 120-2 of cassette 100. The body 1915 is configured to accommodate asymmetric W dimension distribution, about the front groove portion 215 and the rear groove portion 220, of the front port assemblies 1905-1 to 1905-6 and the rear accesses 1910-1 to 1920-3 (the width dimension W extending along the x axis of the reference frame shown in Fig. 19). Further, the first cover part 1920-1 and the second cover part 1920-2 are sized different from each other to accommodate such asymmetric distribution.

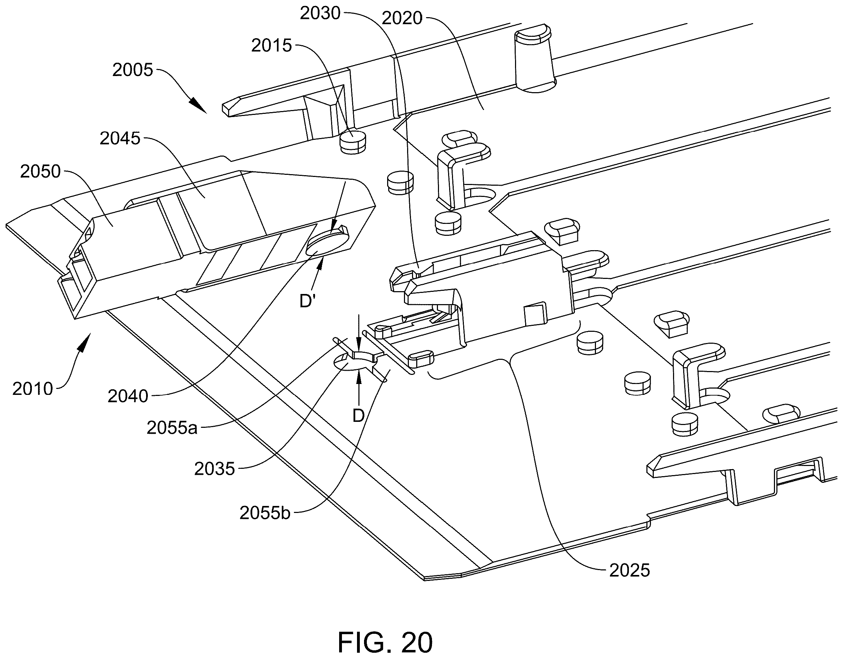

Fig. 20 is a front perspective view of a cassette body 2005 of an alternative embodiment, with a port assembly 2010 of the alternative embodiment positioned for mounting to the cassette body 2005. As can be seen from Fig. 20, the cassette body 2005 includes eight front port assembly fixtures (e.g., front port assembly fixture 2015), four accessory sections (e.g., accessory section 2020), and a front groove portion 2025. The front port assembly fixtures are respectively provided for rotatable mounting of front port assemblies (e.g., front port assembly 105-1 of Fig. 1). The accessory sections are provided for securing optional accessory modules within the cassette body 2005. The front groove portion 2025 is configured for securing the cassette body 2005 to a rail of a patch panel chassis and includes only a single front catch 2030. Additionally, the cassette body 2005 may include one or more elements not shown in Fig. 20, such as a rear groove portion (e.g., rear groove portion 220 of Fig. 2), and one or more rear access openings (e.g., rear access opening 155-1 of Fig. 1).

As can be further seen from Fig. 20, the cassette body 2005 includes a mount opening 2035. The mount opening 2035 is configured to accommodate a protrusion 2040 on the port assembly 2010. The protrusion 2040 may be part of an adapter holder 2045 that holds an adapter 2050 (e.g., an LC duplex adapter), the adapter holder 2045 and adapter 2050 making up the port assembly 2010. Both the mount opening 2035 and the protrusion 2040 may be generally circular, with a diameter D of the mount opening 2035 being smaller than a diameter D' of the protrusion 2040. To allow for insertion of the protrusion 2040 into the mount opening 2035, the mount opening 2035 is bound by two tabs 2055a and 2055b. One or both of the tabs 2055a or 2055b may be manually flexed from their static positions (shown in Fig. 20) so as to effectively enlarge the mount opening 2035 such that the protrusion 2040 may pass through the mount opening 2035. Thereafter, the tabs 2055a and 2055b may be allowed to return to their static positions, thereby securing the protrusion 2040 in the mount opening 2035 and, in turn, securing, the port assembly 2010 to the cassette body 2005.

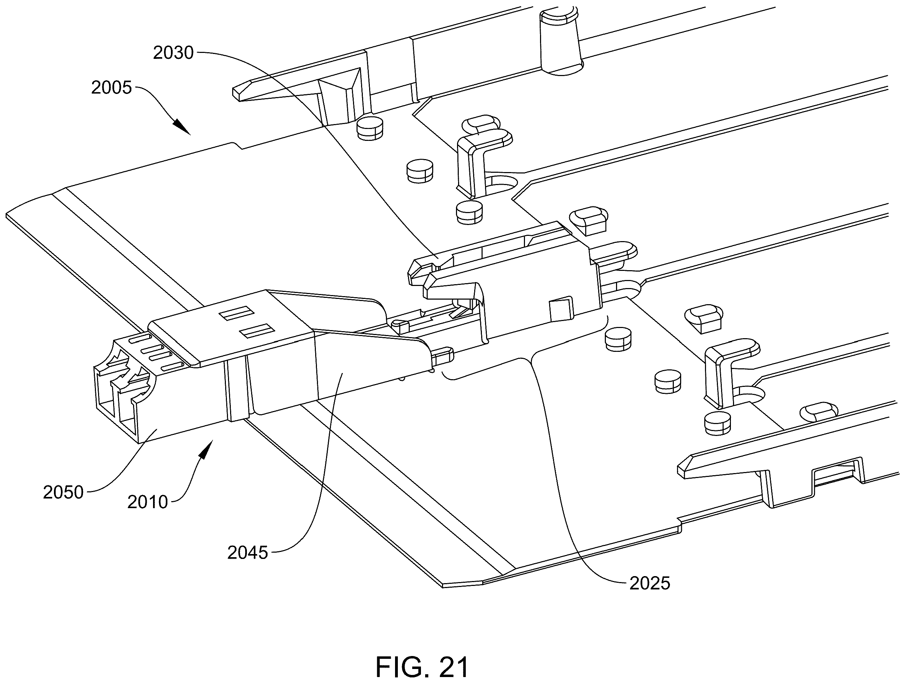

Fig. 21 is a front perspective view of the cassette body 2005 and the port assembly 2010 of Fig. 20, with the port assembly 2010 mounted to the cassette body 2005.

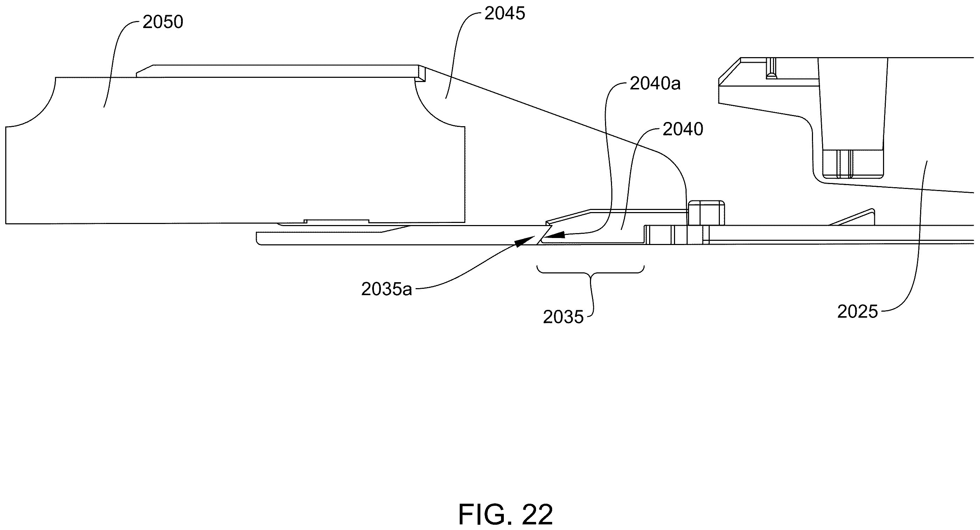

Fig. 22 is a cross-sectional view of a mounting portion of the Fig. 21 arrangement. As can be seen from Fig. 22, the protrusion 2040 may have a dovetail cross-section 2040a, and the mount opening 2035 may have a complimentary dovetail cross-section 2035a. The complimentary relationship of dovetail cross-section 2040a and dovetail cross-section 2035a helps to ensure that the protrusion 2040 remains secured in the mount opening 2035.

Embodiments of the present technology include, but are not restricted to, the following.
(1) A patch panel, including a first sidewall; a second sidewall; a plurality of layers extending along a width dimension of the patch panel from the first sidewall to the second sidewall, being attached to the first sidewall and the second sidewall, and extending along a depth dimension of the patch panel, such that the layers define one or more horizontal openings of the patch panel with each horizontal opening having no vertical support other than the first sidewall and second sidewall, at least one of the layers including one or more rails extending along the depth dimension, and the rails being configured for attaching to respective patch panel components; and one or more cassettes attached to respective ones of the rails, each cassette having a body, a plurality of front port assemblies, and one or more rear accesses, one or more of the front port assemblies being communicatively coupled to one or more of the rear accesses.
(2) The patch panel according to (1), wherein the front port assemblies include one or more rotatable port assemblies, and the rotatable port assemblies are rotatable in a horizontal plane.
(3) The patch panel according to (2), wherein the body includes a plurality of port assembly fixtures, and the one or more rotatable port assemblies snap-fit onto the port assembly fixtures such that the rotatable port assemblies are rotatable about the port assembly fixtures.
(4) The patch panel according to (1), wherein the body includes one or more accessory sections for accommodating respective accessory modules.
(5) The patch panel according to (4), wherein one or more of the cassettes further include an accessory module secured to one of the accessory sections, and the accessory module is at least one of a cable routing module, a splitter module, or a splice protection tube holder module.
(6) The patch panel according to (1), wherein the body has a front groove portion and a rear groove portion, and wherein each cassette is attached to the respective rail by sliding the front groove portion and the rear groove portion onto the rail until a front catch on the front groove portion meets a front recess on the rail and a rear catch on the rear groove portion meets a rear recess on the rail.
(7) The patch panel according to (6), wherein to allow for removal of the cassettes from the respective rails each cassette further includes a front mechanism for manually releasing the front catch from the front recess and a rear mechanism for manually releasing the rear catch from the rear recess.
(8) The patch panel according to (1), wherein each port assembly includes a protection structure for protecting the port assembly from damage upon insertion of the corresponding cassette onto the respective rail or removal of the corresponding cassette from the respective rail.
(9) The patch panel according to (1), wherein at least one cassette includes eight front port assemblies and each of the eight front port assemblies has a duplex fiber optic adapter such that the at least one cassette has sixteen front fiber optic ports, wherein the rear accesses of the at least one cassette include a sixteen fiber multi-fiber connector, and wherein the sixteen front fiber optic ports are coupled to the sixteen fiber multi-fiber connector by respective internal fiber optic cables.
(10) The patch panel according to (9), wherein the sixteen fiber multi-fiber connector is one of a multi-fiber mechanical (MMC) connector, a multi-fiber push on (MPO) connector, or a simplified network - mechanical transfer (SN-MT) connector.
(11) The patch panel according to (1), wherein the patch panel size is one rack unit (RU).
(12) The patch panel according to (11), wherein the patch panel includes nine cassettes, each cassette includes eight front port assemblies, and each of the eight front port assemblies includes a duplex fiber optic adapter, such that the patch panel has one hundred forty four front fiber optic ports.
(13) The patch panel according to (1), wherein for each layer that includes one or more rails the layer includes a guiding notch for each rail, and wherein each cassette includes a flexible tab for engaging the guiding notch during insertion of the cassette onto the corresponding rail so as to position the cassette for attachment to the rail.
(14) The patch panel according to (1), wherein the patch panel further includes a rear cable tie portion that is rotatably attached to the first sidewall and the second sidewall so that the rear cable tie portion can be moved to allow for removal of one or more of the cassettes from the rails.
(15) The patch panel according to (1), wherein each of the layers is formed of plastic reinforced with steel.
(16). The patch panel according to (1), wherein at least one of the front port assemblies includes a mini duplex connector (MDC) fiber optic adapter.
(17) The patch panel according to (1), wherein at least one cassette includes a body having a mount opening; and a port assembly having a protrusion secured in the mount opening.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

## Claims

1. A patch panel, comprising:
a first sidewall;
a second sidewall;
a plurality of layers extending along a width dimension of the patch panel from the first sidewall to the second sidewall, being attached to the first sidewall and the second sidewall, and extending along a depth dimension of the patch panel, such that the layers define one or more horizontal openings of the patch panel with each horizontal opening having no vertical support other than the first sidewall and second sidewall, at least one of the layers including one or more rails extending along the depth dimension, and the rails being configured for attaching to respective patch panel components; and
one or more cassettes attached to respective ones of the rails, each cassette comprising a body, a plurality of front port assemblies, and one or more rear accesses, one or more of the front port assemblies being communicatively coupled to one or more of the rear accesses.

2. The patch panel according to claim 1, wherein the front port assemblies include one or more rotatable port assemblies, and the rotatable port assemblies are rotatable in a horizontal plane.

3. The patch panel according to claim 2, wherein the body comprises a plurality of port assembly fixtures, and the one or more rotatable port assemblies snap-fit onto the port assembly fixtures such that the rotatable port assemblies are rotatable about the port assembly fixtures.

4. The patch panel according to claim 1, wherein the body comprises one or more accessory sections for accommodating respective accessory modules, preferably one or more of the cassettes further comprise an accessory module secured to one of the accessory sections, and the accessory module is at least one of a cable routing module, a splitter module, or a splice protection tube holder module.

5. The patch panel according to claim 1, wherein the body has a front groove portion and a rear groove portion, and wherein each cassette is attached to the respective rail by sliding the front groove portion and the rear groove portion onto the rail until a front catch on the front groove portion meets a front recess on the rail and a rear catch on the rear groove portion meets a rear recess on the rail.

6. The patch panel according to claim 5, wherein to allow for removal of the cassettes from the respective rails each cassette further comprises a front mechanism for manually releasing the front catch from the front recess and a rear mechanism for manually releasing the rear catch from the rear recess.

7. The patch panel according to claim 1, wherein each port assembly comprises a protection structure for protecting the port assembly from damage upon insertion of the corresponding cassette onto the respective rail or removal of the corresponding cassette from the respective rail.

8. The patch panel according to claim 1, wherein at least one cassette includes eight front port assemblies and each of the eight front port assemblies comprises a duplex fiber optic adapter such that the at least one cassette has sixteen front fiber optic ports, wherein the rear accesses of the at least one cassette include a sixteen fiber multi-fiber connector, and wherein the sixteen front fiber optic ports are coupled to the sixteen fiber multi-fiber connector by respective internal fiber optic cables, preferably the sixteen fiber multi-fiber connector is one of a multi-fiber mechanical (MMC) connector, a multi-fiber push on (MPO) connector, or a simplified network - mechanical transfer (SN-MT) connector.

9. The patch panel according to claim 1, wherein the patch panel size is one rack unit (RU).

10. The patch panel according to claim 9, wherein the patch panel comprises nine cassettes, each cassette includes eight front port assemblies, and each of the eight front port assemblies comprises a duplex fiber optic adapter, such that the patch panel has one hundred forty four front fiber optic ports.

11. The patch panel according to claim 1, wherein for each layer that includes one or more rails the layer includes a guiding notch for each rail, and wherein each cassette includes a flexible tab for engaging the guiding notch during insertion of the cassette onto the corresponding rail so as to position the cassette for attachment to the rail.

12. The patch panel according to claim 1, wherein the patch panel further comprises a rear cable tie portion that is rotatably attached to the first sidewall and the second sidewall so that the rear cable tie portion can be moved to allow for removal of one or more of the cassettes from the rails.

13. The patch panel according to claim 1, wherein each of the layers is formed of plastic reinforced with steel.

14. The patch panel according to claim 1, wherein at least one of the front port assemblies includes a mini duplex connector (MDC) fiber optic adapter.

15. The patch panel according to claim 1, wherein at least one cassette comprises:
a body having a mount opening; and
a port assembly having a protrusion secured in the mount opening.
